# EUROPÄISCHE PATENTSCHRIFT

(11) **EP 2 983 940 B1**
(45) Veröffentlichungstag und Bekanntmachung des Hinweises auf die Patenterteilung: **01.03.2017**
(21) Anmeldenummer: 14711726.1
(22) Anmeldetag: 14.03.2014
(51) Int. Cl.: B60L 3/00, B60L 11/18, B62D 21/00, B60K 1/04

(54) **STEUERVORRICHTUNG FÜR EINE OBJEKTANKOPPLUNGSVORRICHTUNG EINES FAHRZEUGS, OBJEKTANKOPPLUNGSVORRICHTUNG FÜR EIN FAHRZEUG UND VERFAHREN ZUM DÄMPFEN EINES AUFPRALLS EINES TRÄGHEITSBESCHLEUNIGTEN OBJEKTS**
CONTROL DEVICE FOR AN OBJECT COUPLING DEVICE OF A VEHICLE, OBJECT COUPLING DEVICE FOR A VEHICLE AND METHOD FOR DAMPENING AN IMPACT OF AN INERTIALLY ACCELERATED OBJECT
DISPOSITIF DE COMMANDE POUR UN DISPOSITIF D'ACCOUPLEMENT D'OBJET D'UN VÉHICULE, DISPOSITIF D'ACCOUPLEMENT D'OBJET POUR UN VÉHICULE ET PROCÉDÉ POUR AMORTIR L'IMPACT D'UN OBJET ACCÉLÉRÉ SOUS L'EFFET DE LA FORCE D'INERTIE

(30) Priorität: 12.04.2013 DE 102013206508
(43) Veröffentlichungstag der Anmeldung: 17.02.2016
(73) Patentinhaber: Robert Bosch GmbH, 70442 Stuttgart (DE)
(72) Erfinder: WOLKENSTEIN, Maja, 74343 Sachsenheim (DE); D'ADDETTA, Gian Antonio, 70563 Stuttgart (DE); KOLATSCHEK, Josef, 71263 Weil Der Stadt (DE)
(86) Internationale Anmeldenummer: PCT/EP2014/055157
(87) Internationale Veröffentlichungsnummer: WO 2014/166699

(56) Entgegenhaltungen:
- DE-A1-102009 053 138
- DE-A1-102010 033 123
- DE-A1-102011 082 731
- DE-A1-102011 105 490
- DE-A1-102011 113 492
- DE-B3-102009 025 430

## Beschreibung

Die Erfindung betrifft eine Steuervorrichtung für eine Objektankopplungsvorrichtung eines Fahrzeugs. Ebenso betrifft die Erfindung eine Objektankopplungsvorrichtung für ein Fahrzeug. Des Weiteren betrifft die Erfindung ein Verfahren zum Dämpfen eines Aufpralls eines trägheitsbeschleunigten Objekts.

### Stand der Technik

In der EP 0 559 176 A1 ist eine Trägerstruktur für ein Elektrofahrzeug beschrieben. In der Trägerstruktur sind mehrere Batterien so anordbar, dass die Batterien bei einem Crash des Elektrofahrzeugs aus ihrer jeweiligen Fixierungsposition entlang einer vorgegebenen Sollstrecke auf eine Soll-Aufprallkomponente zu bewegbar sind. Auf diese Weise soll während des Crashs zumindest zeitweise die abgebremste Masse reduzierbar sein.

### Offenbarung der Erfindung

Die Erfindung betrifft eine Steuervorrichtung für eine Objektankopplungsvorrichtung eines Fahrzeugs mit den Merkmalen des Anspruchs 1, eine Objektankopplungsvorrichtung für ein Fahrzeug mit den Merkmalen des Anspruchs 6 und ein Verfahren zum Dämpfen eines Aufpralls eines trägheitsbeschleunigten Objekts mit den Merkmalen des Anspruchs 15.

Unter dem Begriff "Objektankopplungsvorrichtung" kann auch eine Objektabkopplungsvorrichtung und/oder eine Massekopplungsanordnung verstanden werden.

### Vorteile der Erfindung

Die vorliegende Erfindung realisiert mehrere Möglichkeiten zum Dämpfen eines Aufpralls des Objekts an der Soll-Aufprallkomponente, wobei speziell die Vorgehensweise auswählbar ist, welche im Hinblick auf die vorliegenden Crash-Bedingungen einen möglichst geringen Schaden gewährleistet. Sofern der Crash beispielsweise mit einem hohen Verletzungsrisiko für die Fahrzeuginsassen verbunden ist, kann mittels der vorliegenden Erfindung der Beginn der Dämpfung zeitlich herausgezögert werden, um zu gewährleisten, dass die Masse des Objekts vollständig von der Restmasse des Fahrzeugs entkoppelt ist. Wie unten noch genauer ausgeführt wird, ist auf diese Weise während einer Anfangs-Crashphase eine größere Beschleunigung der Restmasse gewährleistbar. Sofern jedoch bei einem Crash/einem schnellen Abbremsen des Fahrzeugs ein Verletzungsrisiko für Fahrzeuginsassen nicht besteht, kann die Dämpfung des Objekts mittels der vorliegenden Erfindung so frühzeitig gestartet werden, dass eine sanfte Dämpfung ausführbar ist, welche das möglicherweise sehr empfindliche Objekt nicht schädigt. Somit sind Kosten, welche andernfalls bei einem kurzzeitigen und starken Dämpfen des Objekts kurz vor dem Kontakt mit der Soll-Aufprallkomponente auftreten, aufgrund der Schonung des Objekts während der Dämpfung einsparbar. Die vorliegende Erfindung kann somit wahlweise einen optimalen Insassenschutz oder einen optimalen Objektschutz gewährleisten.

Die Gegenstände der vorliegenden Erfindung können für eine Fahrzeugbatterie genutzt werden. Insbesondere bei einem Elektrofahrzeug oder bei einem Hybridfahrzeug weist die Fahrzeugbatterie einen überproportional großen Massenanteil im Vergleich zur Gesamtmasse des Fahrzeugs auf. Beispielsweise kann eine Fahrzeugbatterie für einen derartigen Fahrzeugtyp eine Masse von mehreren 100 kg, wie beispielsweise 100-400 kg, haben. Häufig kann der Massenanteil der Fahrzeugbatterie bis zu 30 % der Gesamtfahrzeugmasse sein. Mittels der vorliegenden Erfindung ist jedoch sicherstellbar, dass die hohe Masse keine potentielle Gefahr im Falle eines plötzlichen Abbremsens, eines Unfalls und/oder eines Crashs des Fahrzeugs darstellt. Es wird allerdings darauf hingewiesen, dass die Anwendbarkeit der Gegenstände der vorliegenden Erfindung nicht auf eine Fahrzeugbatterie limitiert ist. Ebenso ist die Anwendbarkeit der vorliegenden Erfindung nicht auf ein Hybrid- oder ein Elektrofahrzeug beschränkt.

In einer vorteilhaften Ausführungsform ist die Steuervorrichtung dazu ausgelegt, die jeweilige Einsetzzeit des Soll-Betriebsmodus und/oder die jeweilige Zeitdifferenz zwischen der Austrittszeit und der Einsetzzeit des Soll-Betriebsmodus unter Berücksichtigung des mindestens einen Sensorsignals festzulegen und die Dämpfungseinrichtung zu der Einsetzzeit mittels des mindestens einen Steuersignals zu aktivieren. Somit kann wahlweise entweder sehr früh bereits mit einem (sanften) Dämpfen des entlang der Sollstrecke bewegten Objekts oder erst nach einem Einhalten einer vorgegebenen Zeitspanne mit einem (eine vergleichsweise große Dämpfungskraft auf das Objekt bewirkenden) Dämpfen begonnen werden. Insbesondere kann dabei berücksichtigt werden, ob ein Schutz des Objekts gegenüber einer mittels der Dämpfung darauf ausgeübten Dämpfungskraft oder eine verzögerte Dämpfung zum Gewährleisten eines besseren Schutzes der Fahrzeuginsassen vorteilhafter ist.

Bevorzugter Weise ist die Steuervorrichtung dazu ausgelegt, mindestens einen Gasgenerator, mindestens eine Schließeinrichtung, mindestens ein Ventil und/oder mindestens einen Zünder der Dämpfungseinrichtung mittels des mindestens einen Steuersignals so anzusteuern, dass ein Gasstrom in mindestens eine aufblasbare Einrichtung der Dämpfungseinrichtung und/oder in ein zwischen dem Objekt und der Soll-Aufprallkomponente liegendes Volumen auslösbar ist. Auf diese Weise ist sicher gewährleistbar, dass ab der bevorzugten Einsetzzeit die gewünschte Dämpfung schnell und verlässlich auf das Objekt ausübbar ist.

In einer vorteilhaften Weiterbildung ist die Steuervorrichtung zusätzlich dazu ausgelegt, mindestens eine Soll-Größe bezüglich einer Soll-Leistung des mindestens einen Gasgenerators, einer Soll-Öffnungsdauer und/oder einer Soll-Öffnungsspaltgröße der mindestens einen Schließeinrichtung, einer Soll-Öffnungsdauer und/oder einer Soll-Öffnungsspaltgröße des mindestens einen Ventils, einer Soll-Anzahl der zu aktivierenden Gasgeneratoren und/oder Zünder und/oder einer Soll-Anzahl der zu öffnenden Schließeinrichtungen und/oder Ventile unter Berücksichtigung des mindestens einen Sensorsignals festzulegen. Somit kann nicht nur der Beginn der Dämpfung, sondern auch die Dämpfungsstärke im Hinblick auf das mindestens eine Sensorsignal optimiert werden.

In einer weiteren vorteilhaften Ausführungsform ist die Steuervorrichtung zusätzlich dazu ausgelegt, unter Berücksichtigung des mindestens einen Sensorsignals die Austrittszeit des Objekts aus der vorgegebenen Fixierungsposition festzulegen und eine Objektfixierungseinrichtung der Objektanordnungsvorrichtung so anzusteuern, dass das Objekt durch die angesteuerte Objektfixierungseinrichtung zu der festgelegten Austrittszeit freigebbar ist. Damit kann die Steuervorrichtung auch dazu eingesetzt werden, das Objekt von dem Fahrzeug zu entkoppeln.

Die oben ausgeführten Vorteile sind auch bei einer Dämpfungseinrichtung, welche mit der entsprechenden Steuervorrichtung zusammenwirken kann, gewährleistet.

In einer vorteilhaften Ausführungsform umfasst die Dämpfungseinrichtung mindestens einen Gasgenerator, mindestens eine Schließeinrichtung, mindestens ein Ventil und/oder mindestens einen Zünder, welche mittels des mindestens einen Steuersignals so ansteuerbar sind, dass ein Gasstrom in mindestens eine aufblasbare Einrichtung der Dämpfungseinrichtung und/oder in ein zwischen dem Objekt und der Soll-Aufprallkomponente liegendes Volumen auslösbar ist. Die Dämpfungseinrichtung ist somit kostengünstig ausführbar. Außerdem können zum Herstellen der Dämpfungseinrichtung standardgemäße Verfahren eingesetzt werden. Selbst bei einer Massenherstellung der Dämpfungseinrichtung ist somit eine vorteilhafte Güte gewährleistet.

Beispielsweise umfasst die Dämpfungseinrichtung als die mindestens eine aufblasbare Einrichtung mindestens einen Luftsack, mindestens einen Gurt-integrierten Luftsack und/oder mindestens eine aufblasbare Metallstruktur. Damit ist eine Vielzahl von möglichen Ausführungsmöglichkeiten für die Dämpfungseinrichtung realisierbar, wobei auf häufig eingesetzte Bauteile zurückgegriffen werden kann.

Vorteilhafter Weise ist mittels der Dämpfungseinrichtung ein Insassenschutzmodus realisierbar, in welchem das aus der Fixierungsposition bewegte Objekt zuerst entlang einer ersten Teilstrecke der vorgegebenen Sollstrecke dämpfungsfrei bewegbar ist und anschließend entlang einer zweiten Teilstrecke der vorgegebenen Sollstrecke mittels der Dämpfungseinrichtung mit einer ersten Verzögerungskraft verzögerbar ist. Außerdem kann mittels der Dämpfungseinrichtung zusätzlich ein Objektschutzmodus realisierbar sein, in welchem das aus der Fixierungsposition bewegte Objekt entlang der vorgegebenen Sollstrecke mittels der Dämpfungseinrichtung mit einer zweiten Verzögerungskraft kleiner als der ersten Verzögerungskraft verzögerbar ist. Somit kann situationsbedingt zwischen einem optimierten Insassenschutz und, sofern kein Verletzungsrisiko für die Fahrzeuginsassen besteht, einem optimierten Objektschutz gewählt werden.

In einer vorteilhaften Weiterbildung ist die Objektfixierungseinrichtung aus einem ersten Modus, in welchem das Objekt mittels der Objektfixierungseinrichtung in der Fixierungsposition fixierbar ist, in einen zweiten Modus so steuerbar, dass das Objekt ab einem Steuern der Objektfixierungseinrichtung in den zweiten Modus aus der Fixierungsposition freigebbar ist. Insbesondere kann die Objektfixierungseinrichtung mittels der Steuervorrichtung aus dem ersten Modus in den zweiten Modus steuerbar sein. Durch diese Multifunktionalität der Steuervorrichtung kann eine zusätzliche Steuerelektronik zum Schalten der Objektfixierungseinrichtung eingespart werden.

Außerdem kann die Objektankopplungsvorrichtung eine Führungsstruktur aufweisen, mittels welcher das mittels der Trägheitskraft bewegbare Objekt entlang der vorgegebenen Sollstrecke führbar ist. Somit kann eine bevorzugte Sollstrecke des Objekts gezielt vorgebbar sein.

In einer vorteilhaften Ausführungsform umfasst die Dämpfungseinrichtung die oben erläuterte Steuervorrichtung.

Die erläuterten Vorteile sind auch realisierbar durch das Verfahren zum Dämpfen eines Aufpralls eines trägheitsbeschleunigten Objekts. Es wird darauf hingewiesen, dass das Verfahren gemäß den oben ausgeführten Ausführungsformen weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1j: schematische Darstellungen und Koordinatensysteme zum Erläutern einer ersten Ausführungsform der Steuervorrichtung und der Objektankopplungsvorrichtung;
- Fig. 2a und 2b: schematische Darstellungen einer zweiten Ausführungsform der Objektankopplungsvorrichtung;
- Fig. 3a und 3b: schematische Darstellungen einer dritten Ausführungsform der Objektankopplungsvorrichtung; und
- Fig. 4: ein Flussdiagramm zum Erläutern einer Ausführungsform des Verfahrens zum Dämpfen eines Aufpralls eines trägheitsbeschleunigten Objekts.

### Ausführungsformen der Erfindung

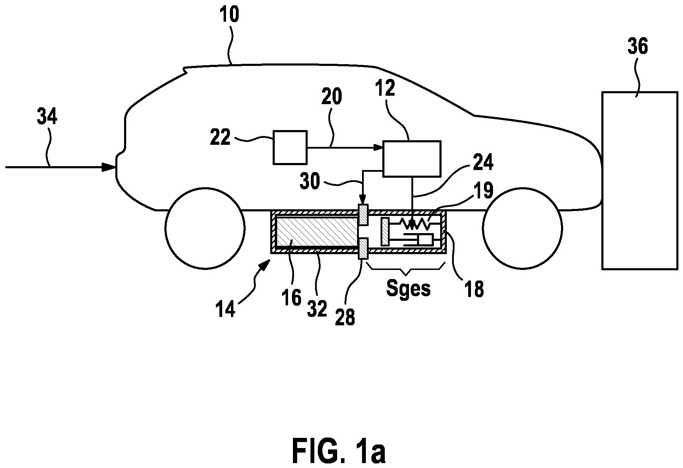

Fig. 1a bis 1j zeigen schematische Darstellungen und Koordinatensysteme zum Erläutern einer ersten Ausführungsform der Steuervorrichtung und der Objektankopplungsvorrichtung.

Das in Fig. 1a schematisch dargestellte Fahrzeug 10 ist mit einer Steuervorrichtung 12 und einer Objektankopplungsvorrichtung 14 ausgestattet. Die in Fig. 1a lediglich schematisch dargestellte Objektankopplungsvorrichtung 14 ist für ein während einer Normalfahrt des Fahrzeugs 10 in einer vorgegebenen Fixierungsposition an und/oder in der Objektankopplungsvorrichtung 14 fixierbares Objekt 16 ausgelegt. Das Objekt 16 ist bei einem starken Abbremsen des Fahrzeugs 10, einem Unfall und/oder einem Crash mittels einer Trägheitskraft aus der Fixierungsposition entlang einer vorgegebenen Sollstrecke Sges auf eine Soll-Aufprallkomponente 18 (der Objektankopplungsvorrichtung 14 und/oder des Fahrzeugs 10) zu bewegbar. Außerdem ist die Objektankopplungsvorrichtung 14 so mittels der Steuervorrichtung 12 ansteuerbar, dass die Steuervorrichtung 12 und eine Dämpfungseinrichtung 19 der Objektankopplungsvorrichtung 14 zusammenwirken können.

Die Steuervorrichtung 12 kann z.B. in die Objektankopplungsvorrichtung 14 integriert sein. Als Alternative dazu können die Objektankopplungsvorrichtung 14 und die Steuervorrichtung 12 auch als zwei räumlich getrennt an dem Fahrzeug 10 anordbare Einheiten ausgebildet sein.

Das Objekt 16 kann beispielsweise eine Fahrzeugbatterie sein. Die in der Objektankopplungsvorrichtung 14 angeordnete Fahrzeugbatterie kann insbesondere als einheitlicher steifer Block im Bereich eines Unterbodens des Fahrzeugs 10 (idealerweise zwischen Vorder- und Hinterachse) vorliegen. Auf diese Weise ist ein Gesamtschwerpunkt des Fahrzeugs 10 absenkbar. Es wird jedoch darauf hingewiesen, dass die Steuervorrichtung 12 und die Objektankopplungsvorrichtung 14 nicht auf ein als Fahrzeugbatterie ausgebildetes Objekt 16 oder auf eine bestimmte Anordnung des Objekts 16 an und/oder in dem Fahrzeug 10 mittels der Objektankopplungsvorrichtung 14 limitiert sind.

Die Steuervorrichtung 12 und die Objektankopplungsvorrichtung 14 können auch für mehrere Objekte 16 ausgelegt sein. Die Erwähnung von lediglich dem einen Objekt 16 dient nur zum besseren Verständnis. Unter der Objektankopplungsvorrichtung 14 kann auch eine Objektabkopplungsvorrichtung und/oder eine Massekopplungsanordnung verstanden werden.

Die Steuervorrichtung 12 ist dazu ausgelegt, unter Berücksichtigung mindestens eines bereitgestellten Sensorsignals 20 mindestens eines fahrzeugeigenen Sensors 22 die Dämpfungseinrichtung 19 der Objektankopplungsvorrichtung 14 mittels mindestens eines Steuersignals 24 so anzusteuern, dass das während der Normalfahrt des Fahrzeugs 10 in der vorgegebenen Fixierungsposition an und/oder in der Objektankopplungsvorrichtung 14 fixierbare Objekt 16, welches mittels einer Trägheitskraft aus der Fixierungsposition entlang der vorgegebenen Sollstrecke Sges auf die Soll-Aufprallkomponente 18 zu bewegbar ist, vor einem Kontakt des Objekts 16 mit der Soll-Aufprallkomponente 18 mittels der angesteuerten Dämpfungseinrichtung 19 verzögerbar ist. Außerdem ist die Steuervorrichtung 12 dazu ausgelegt, unter Berücksichtigung des mindestens einen Sensorsignals 20 einen Soll-Betriebsmodus der Dämpfungseinrichtung 19 aus mindestens zwei ausführbaren Betriebsmoden der Dämpfungseinrichtung 19 festzulegen. Die mindestens zwei ausführbaren Betriebsmoden der Dämpfungseinrichtung 19 weisen eine unterschiedliche Zeitdifferenz Δt zwischen einer Austrittszeit t0 des Objekts 16 aus der Fixierungsposition und einer Einsetzzeit ta einer mittels der angesteuerten Dämpfungseinrichtung 19 auszuführenden Verzögerung/Abbremsung des Objekts 16 auf. Die Dämpfungseinrichtung 19 ist mittels des mindestens einen Steuersignals 24 in den festgelegten Soll-Betriebsmodus steuerbar.

Somit kann bereits innerhalb eines Zeitintervalls zwischen der Einsetzzeit ta der Dämpfungseinrichtung 19 und einem beginnenden Kontakt/Auftreffen des Objekts 16 an der Soll-Aufprallkomponente 18 mit dem Verzögern/Abbremsen/Verlangsamen des Objekts 16 begonnen werden. Dies gewährleistet einen deutlich gedämpften Aufprall des Objekts 16 an der Soll-Aufprallkomponente 18, und damit ein sanfteres Wiederankoppeln des Objekts 16 an die Fahrzeugrestmasse.

Außerdem kann die Einsetzzeit ta, bzw. die Zeitdifferenz Δt zwischen der Austrittszeit t0 und der Einsetzzeit ta, durch die Festlegung des Soll-Betriebsmodus der Dämpfungseinrichtung 19 so festgelegt werden, dass ein in Hinblick auf das mindestens eine Sensorsignal 20 optimierter Verzögerungsmodus/Abbremsmodus ausführbar ist. Auf die jeweiligen Vorteile der verschiedenen Vorgehensweise beim Dämpfen/Verzögern des Objekts 16 wird unten noch eingegangen.

Der mindestens eine fahrzeugeigene Sensor 22 kann z.B. mindestens ein Geschwindigkeitssensor, mindestens ein Beschleunigungssensor, mindestens ein Drucksensor und/oder mindestens ein Crashsensor sein. Ebenso kann mindestens ein PreCrash-Sensor und/oder mindestens ein Fahrerassistenzsensor als der mindestens eine fahrzeugeigene Sensor 22 eingesetzt werden. Der mindestens eine fahrzeugeigene Sensor 22 ist beispielsweise ein Mono-, Stereo-, Video-, LIDAR- und/oder Radarsensor. Der mindestens eine fahrzeugeigene Sensor 22 kann auch eine Kamera umfassen. Auch Kombinationen der hier aufgezählten Sensortypen und/oder weitere visuell basierte Sensoren können für den mindestens einen fahrzeugeigenen Sensor 22 verwendet werden. Der mindestens eine fahrzeugeigene Sensor 22 kann im Fahrzeug 10 fest verbaut sein und/oder durch mobile Endgeräte zur Verfügung gestellt werden.

Somit können eine Geschwindigkeit des Fahrzeugs 10, eine Beschleunigung des Fahrzeugs 10, ein in mindestens einem Teilvolumen des Fahrzeugs 10 auftretender Druck und/oder eine Crashstärke eines Crashs des Fahrzeugs 10 bei der Festlegung des Soll-Betriebsmodus mittels der Steuervorrichtung 12 berücksichtigt werden. Ebenso können eine Crashschwere einer Kollision und/oder Informationen über einen Kollisionsgegner, wie beispielsweise dessen Geschwindigkeit, dessen Gewicht, dessen Größe, dessen Abmessung und/oder dessen Beladungszustand, bei der Festlegung des Soll-Betriebsmodus mittels der Steuervorrichtung 12 berücksichtigt werden. Eine Information bezüglich eines Belastungszustands des Kollisionsgegners kann z.B. auch eine (zusätzliche) Beladungsmasse, eine Anzahl von Fahrzeuginsassen und/oder ein Gewicht der Fahrzeuginsassen umfassen.

Zusätzlich sind eine PreCrash- Information, eine HotSpot-Information zu Unfallschwerpunkten, eine Car2Car-Information und/oder eine Car2X-Information bei der Festlegung des Soll-Betriebsmodus mittels der Steuervorrichtung 12 berücksichtigbar. Berücksichtigbare Informationen können auch über einen entsprechenden Informationsaustausch zwischen dem Fahrzeug 10 und dem weiteren Fahrzeug, insbesondere über GPS, ausgetauscht werden. Entsprechend kann auch ein in Hinblick auf mindestens eine dieser Größen optimierter Verzögerungsmodus/Abbremsmodus von der Steuervorrichtung 12 festgelegt und mittels der angesteuerten Dämpfungseinrichtung 19 ausgeführt werden.

Unter der Einsetzzeit ta der Dämpfungseinrichtung 19 ist vorzugsweise ein Zeitpunkt zu verstehen, ab welchem die angesteuerte Dämpfungseinrichtung 19 eine verzögernde Wirkung/Kraft auf das Objekt 16 ausübt. Die Einsetzzeit ta liegt in der Regel vor dem Auftreffen des Objekts 16 an der Soll-Aufprallkomponente 18. Die Einsetzzeit ta kann gleich einer Aktvierungszeit des Dämpfungseinrichtung 19 sein. Die Dämpfungseinrichtung 19 kann jedoch auch zu einer Aktivierungszeit vor der Einsetzzeit ta aktiviert sein/werden, obwohl die verzögernde Wirkung/Kraft auf das Objekt 16 erst zu der späteren Einsetzzeit ta einsetzt/beginnt. Unter der Zeitdifferenz Δt ist eine Zeitspanne zwischen der Austrittszeit t0 des Objekts 16 aus seiner Fixierungsposition und der Einsetzzeit ta (einem Einsetzen der Wirkung/Kraft der Dämpfungseinrichtung 19) zu verstehen. Wie unten genauer ausgeführt wird, kann die Austrittszeit t0 ermittelt oder von der Steuervorrichtung 12 festgelegt sein.

Beispielsweise kann die Steuervorrichtung 12 dazu ausgelegt sein, die jeweilige Einsetzzeit ta des Soll-Betriebsmodus und/oder die jeweilige Zeitdifferenz Δt zwischen der Austrittszeit t0 und der Einsetzzeit ta des Soll-Betriebsmodus unter Berücksichtigung des mindestens einen Sensorsignals 20 (direkt) festzulegen und die Dämpfungseinrichtung 19 zu der festgelegten Einsetzzeit ta mittels des mindestens einen Steuersignals 24 zu aktivieren. Beispiele für schnell aktivierbare Dämpfungseinrichtungen 19 werden unten noch beschrieben. Anstelle einer direkten Festlegung der Einsetzzeit ta und der Zeitdifferenz Δt kann die Steuervorrichtung 12 jedoch auch einen entsprechenden Betriebsmodus als Soll-Betriebsmodus festlegen.

Wie unten genauer ausgeführt ist, kann die Steuervorrichtung 12 dazu ausgelegt sein, mindestens einen Gasgenerator, mindestens eine Schließeinrichtung, mindestens ein Ventil und/oder mindestens einen Zünder der Dämpfungseinrichtung 19 mittels des mindestens einen Steuersignals 24 so anzusteuern, dass ein Gasstrom (z.B. ein Luftstrom) in mindestens eine aufblasbare Einrichtung 26 der Dämpfungseinrichtung 19 und/oder in ein zwischen dem Objekt 16 und der Soll-Aufprallkomponente 18 liegendes Volumen auslösbar ist. Durch ein derartiges Ansteuern ist eine schnelle Aktivierung der Dämpfungseinrichtung 19 bewirkbar.

Insbesondere kann die Steuervorrichtung 12 dazu ausgelegt sein, mindestens eine Soll-Größe bezüglich einer Soll-Leistung des mindestens einen Gasgenerators, einer Soll-Öffnungsdauer und/oder einer Soll-Öffnungsspaltgröße der mindestens einen Schließeinrichtung, einer Soll-Öffnungsdauer und/oder einer Soll-Öffnungsspaltgröße des mindestens einen Ventils, einer Soll-Anzahl der zu aktivierenden Gasgeneratoren und/oder Zünder und/oder einer Soll-Anzahl der zu öffnenden Schließeinrichtungen und/oder Ventile unter Berücksichtigung des mindestens einen Sensorsignals 20 festzulegen. Somit können eine Stärke und/oder ein Gesamtvolumen des in die mindestens eine aufblasbare Einrichtung 26 bewirkten Gasstroms gezielt festgelegt werden. Auf diese Weise sind auch ein Aufblasvolumen und/oder eine Festigkeit der mindestens einen aufblasbaren Einrichtung 26 innerhalb eines Wertebereichs wählbar, wobei ein verlässliches Einhalten des jeweils ausgewählten Werts gewährleistet ist. Mittels des Aufblasvolumens kann auch die Einsetzzeit ta, ab welcher ein Kontakt zwischen dem Objekt 16 und der mindestens einen zumindest teilweise aufgeblasenen Einrichtung 26 stattfindet, festgelegt werden. Des Weiteren kann durch die Wahl der Festigkeit der mindestens einen zumindest teilweise aufgeblasenen Einrichtung 26 eine zum Verzögern/Abbremsen auf das Objekt 16 ausgeübte Kraft vorgegeben werden.

Die in Fig. 1a schematisch dargestellte Objektankopplungsvorrichtung 14 weist eine Objektfixierungseinrichtung 28 auf, mittels welcher das Objekt 16 während einer Normalfahrt des Fahrzeugs 10 in der vorgegebenen Fixierungsposition an und/oder in der Objektankopplungsvorrichtung 14 fixierbar ist. Die Objektfixierungseinrichtung 28 kann aus einem ersten Modus, in welchem das Objekt 16 mittels der Objektfixierungseinrichtung 28 in der Fixierungsposition fixierbar ist, in einen zweiten Modus so steuerbar sein, dass das Objekt 16 ab einem Steuern der Objektfixierungseinrichtung 28 in den zweiten Modus aus der Fixierungsposition freigebbar ist. Die Objektfixierungseinrichtung 28 ist bevorzugter Weise so ausgelegt, dass das Objekt 16 während der Normalfahrt des Fahrzeugs 10 bewegungslos in der Fixierungsposition verharrt. Demgegenüber bewirkt ein Steuern der Objektfixierungseinrichtung 28 in ihren zweiten Modus, dass das Objekt 16 aus der Fixierungsposition gelöst wird. Die Objektfixierungseinrichtung 28 kann beispielsweise ein mechanisches Element sein. Andere Ausbildungsmöglichkeiten für die Objektfixierungseinrichtung 28 sind ebenfalls möglich.

Optionaler Weise kann die Steuervorrichtung 12 dazu ausgelegt sein, unter Berücksichtigung des mindestens einen bereitgestellten Sensorsignals 20 die Austrittszeit t0 des Objekts 16 aus der vorgegebenen Fixierungsposition festzulegen. Beispielsweise können mittels der Steuervorrichtung 12 ein plötzliches Abbremsen des Fahrzeugs 10, ein Unfall und/oder ein Crash durch die Auswertung des mindestens einen bereitgestellten Sensorsignals 20 erkennbar sein. In diesem Fall ist die Objektfixierungseinrichtung 28 der Objektanordnungsvorrichtung 14 mittels eines weiteren Steuersignals 30 der Steuervorrichtung 12 so ansteuerbar, dass das Objekt 16 durch die angesteuerte Objektfixierungseinrichtung 28 zu der festgelegten Austrittszeit t0 freigebbar ist. Die Objektfixierungseinrichtung 28 ist somit zu der Austrittzeit t0 mittels der Steuervorrichtung 12 aus dem ersten Modus in den zweiten Modus steuerbar. Durch diese Multifunktionalität der Steuervorrichtung 12 kann eine zusätzliche Elektronik zum Ansteuern der Objektfixierungseinrichtung 28 eingespart werden.

Es wird jedoch darauf hingewiesen, dass das Objekt 16 wahlweise auch so mechanisch mittels der Objektfixierungseinrichtung 28 in der Fixierungsposition anordbar sein kann, dass es lediglich aufgrund einer eine Haftreibung übersteigenden Trägheitskraft aus der Fixierungsposition herausbewegbar ist. In diesem Fall kann die Austrittszeit t0 mittels einer geeigneten Sensorik ermittelbar sein.

In der Ausführungsform der Fig. 1a weist die Objektankopplungsvorrichtung 14 auch eine Führungsstruktur 32 auf, mittels welcher das mittels der Trägheitskraft bewegbare Objekt 16 entlang der vorgegebenen Sollstrecke Sges führbar ist. Die Führungsstruktur 32 ist vorzugsweise so ausgelegt, dass das von der Fahrzeugrestmasse entkoppelte Objekt 16 in eine Fahrtrichtung 34/weg von einem Aufprallhindernis 36 des Fahrzeugs 10 bewegbar ist. Dies ist durch einen geeigneten Einsatz von Gleit- und/oder Wälzlagern verlässlich realisierbar. Außerdem kann die Objektankopplungsvorrichtung 14 so ausgebildet sein, dass das Objekt 16 durch eine umgebende Tragstruktur gut geschützt ist oder als Tragstruktur selbst zum Schutz der Fahrgastzelle beitragen kann. Die Ausbildbarkeit der Objektankopplungsvorrichtung 14 ist jedoch nicht auf eine Ausstattung mit einer Führungsstruktur 32 oder mit einer bestimmten Tragstruktur limitiert.

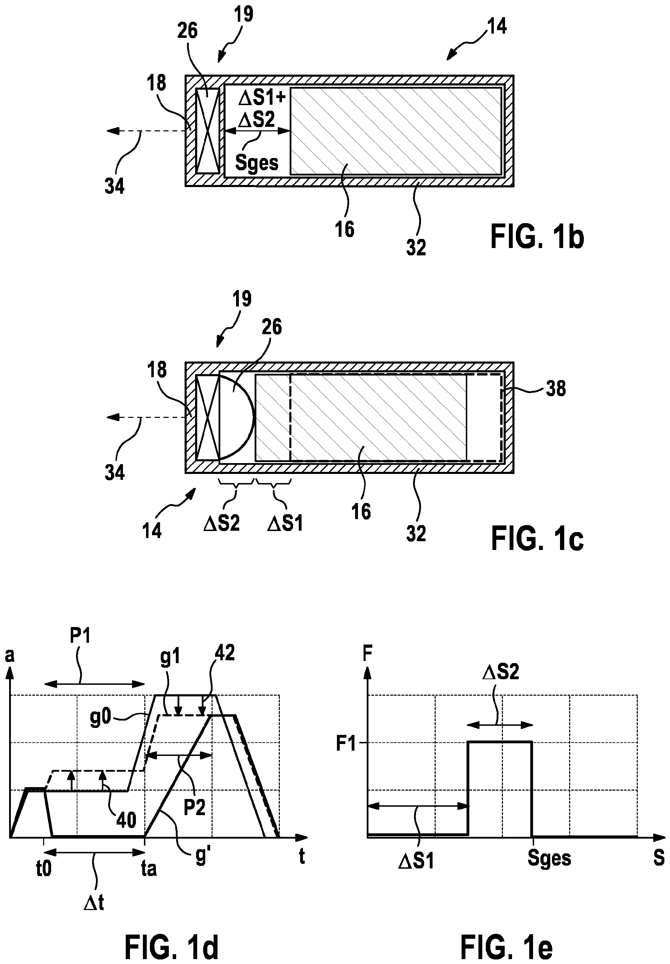

In Fig. 1b ist die Dämpfungseinrichtung 19 der Objektankopplungsvorrichtung 14 schematisch dargestellt. Die Dämpfungseinrichtung 19 ist mittels des mindestens einen Steuersignals 24 der Steuervorrichtung 12 so ansteuerbar, dass das mittels einer Trägheitskraft aus der Fixierungsposition entlang der vorgegebenen Sollstrecke Sges auf eine Soll-Aufprallkomponente 18 zu bewegbare Objekt 16 vor einem Kontakt des Objekts 16 mit der Soll-Aufprallkomponente 18 mittels der angesteuerten Dämpfungseinrichtung 19 verzögerbar/abbremsbar ist. Außerdem ist die Dämpfungseinrichtung 19 mittels des mindestens einen Steuersignals 24 in einen Soll-Betriebsmodus aus mindestens zwei ausführbaren Betriebsmoden der Dämpfungseinrichtung 19 mit einer unterschiedlichen Zeitdifferenz Δt zwischen der Austrittszeit t0 des Objekts 16 aus der Fixierungsposition und der Einsetzzeit ta (der mittels der angesteuerten Dämpfungseinrichtung 19 auszuführenden Verzögerung des Objekts 16) steuerbar.

Die Dämpfungseinrichtung 19 der Fig. 1a bis 1j umfasst mindestens einen Gasgenerator, mindestens ein Ventil, mindestens eine Schließeinrichtung und/oder mindestens einen Zünder, welche mittels des mindestens einen Steuersignals 24 ansteuerbar sind. Auf diese Weise ist ein Gasstrom (z.B. ein Luftstrom) in die mindestens eine aufblasbare Einrichtung 26 der Dämpfungseinrichtung 19 auslösbar. Als die mindestens eine aufblasbare Einrichtung 26 weist die Dämpfungseinrichtung 19 der Fig. 1a bis 1j einen Luftsack/Airbag 26 auf, welcher an der Soll-Aufprallkomponente 18 angeordnet ist. Weitere Ausbildungsmöglichkeiten für die aufblasbare Einrichtung 26 und die Dämpfungseinrichtung 19 werden unten noch beschrieben.

Die Dämpfungseinrichtung 19 realisiert ein Energieabsorptionssystem, mittels welchem es möglich ist, eine kinetische Energie des mittels der Trägheitskraft bewegten Objekts 16 ganz oder zum Teil in Deformation und/oder Wärme umzuwandeln. Insbesondere die Verwendung mindestens einer aufblasbaren Einrichtung 26, wie beispielsweise eines Luftsacks/Airbags 26, ermöglicht eine sanfte Verzögerung und damit ein sanftes Wiederankoppeln des Objekts 16 an die restliche Fahrzeugstruktur.

Bei der Ausführungsform der Fig. 1a bis 1j ist die Dämpfungseinrichtung 19 wahlweise in einem ersten Betriebsmodus mit einer Zeitdifferenz Δt ungleich Null zwischen der Austrittszeit t0 und der nachfolgenden Einsetzzeit ta oder in einem zweiten Betriebsmodus mit einer Zeitdifferenz Δt gleich Null (die Einsetzzeit ta ist gleich der Austrittszeit t0) betreibbar:

Fig. 1c bis 1e geben ein Dämpfen wieder, bei welchem zwischen der Austrittszeit t0 des Objekts 16 aus der mittels der gestrichelten Linie 38 wiedergegebenen Fixierungsposition und der Einsetzzeit ta der Dämpfungseinrichtung 19 eine Zeitdifferenz Δt ungleich Null liegt. Eine Abszisse des Koordinatensystems der Fig. 1d ist die Zeitachse t. Mittels einer Ordinate des Koordinatensystems der Fig. 1d ist eine Beschleunigung a angegeben. Eine Abszisse des Koordinatensystems der Fig. 1e entspricht einem Verstellweg s des Objekts 16 aus seiner Fixierungsposition. Mittels einer Ordinate des Koordinatensystems der Fig. 1e ist eine auf das Objekt 16 währenddessen ausgeübte Verzögerungskraft F wiedergegeben.

Bis zur Austrittszeit t0 ist das Objekt 16 fest mit dem Fahrzeug 10 verbunden und steigert damit die Fahrzeugmasse. Zu der Austrittszeit t0 wird die Objektfixierungseinrichtung 28 aufgrund eines festgestellten Crashs so angesteuert, dass die Objektfixierungseinrichtung 28 das Objekt 16 freigibt. Das Objekt 16 bewegt sich deshalb ab der Austrittszeit t0 aus der Fixierungsposition heraus entlang der Fahrrichtung 34. Allerdings übt die Dämpfungseinrichtung 19 zu der Austrittszeit t0 noch keine Wirkung/Dämpfung auf das Objekt 16 aus. Das bewegte Objekt 16 ist deshalb zuerst entlang einer ersten Teilstrecke Δs1 der vorgegebenen Sollstrecke Sges dämpfungsfrei bewegbar. Man kann dies auch so umschreiben, dass das Objekt 16 während einer ersten Phase P1/der Differenzzeit Δt dämpfungsfrei mittels der Trägheitskraft bewegbar ist. Das Objekt 16 kann sich somit in dieser ersten Phase P1 kraftfrei in Fahrtrichtung 34 bewegen.

Es wird ausdrücklich darauf hingewiesen, dass die Dämpfungseinrichtung 19 in dieser ersten Phase P1 während der Differenzzeit Δt keine Kraft auf das Objekt 16 ausübt. Deshalb ist das Objekt 16 während seines Verstellens um die erste Teilstrecke Δs1/während der Differenzzeit Δt vollständig von einer Restmasse des Fahrzeugs 10 entkoppelt. Die Dauer der ersten Phase P1 ist gleich der Differenzzeit Δt. Auch eine Länge der ersten Teilstrecke Δs1 der vorgegebenen Sollstrecke Sges entspricht der Differenzzeit Δt. Die erste Teilstreckt Δs1 kann beispielsweise eine Länge zwischen 1,5 bis 3,5 cm haben.

Während der ersten Phase P1, welche ab der Austrittszeit t0 beginnt, ist das Objekt 16 von der Fahrzeugrestmasse des Fahrzeugs 10 getrennt. Eine während der ersten Phase P1 nach einem Abkoppeln des Objekts 16 auftretende Beschleunigung a der Fahrzeugrestmasse ist mittels eines Graphens g1 in dem Koordinatensystem der Fig. 1d wiedergegeben. Zum Vergleich ist mit dem Graphen g0 eine Beschleunigung a dargestellt, welche das Fahrzeug 10 ohne ein Abkoppeln des Objekts 16 hätte. Wie durch einen Vergleich der Graphen g1 und g0 erkennbar ist, bewirkt die (vollständige) Abkopplung der Masse des Objekts 16 von der Fahrzeugrestmasse eine Steigerung 40 der Beschleunigung a während der ersten Phase P1. (Der Graph g' gibt eine Beschleunigung a des Objekts 16 wieder.)

Die während der ersten Phase P1/der Differenzzeit Δt gesteigerte Beschleunigung a der Fahrzeugrestmasse stellt sicher, dass sich der Auslösezeitpunkt der Gurtstraffer und der Luftsäcke in der Fahrgastzelle zeitlich nicht verschiebt. (Eine Verschiebung des Auslösezeitpunkt der Gurtstraffer und der Luftsäcke in der Fahrgastzelle könnte die Insassenrückhaltung des Fahrzeugs 10 verschlechtern.) Somit ist aufgrund der vollständigen Entkopplung der Masse des Objekts 16 insbesondere in der für die Sensorik wichtigen Anfangsphase (zwischen 0 bis ca. 30 ms) des Crashablaufs ein verlässliches Auslösen der Gurtstraffer und der Luftsäcke in der Fahrgastzelle bei Bedarf sicher gewährleistet. Man kann dies auch so umschreiben, dass durch die vollständige Entkopplung der Masse des Objekts 16 der Fahrzeugimpuls und damit die Belastung auf die Fahrzeuginsassen während der Anfangsphase des Crashs deutlich verringerbar sind.

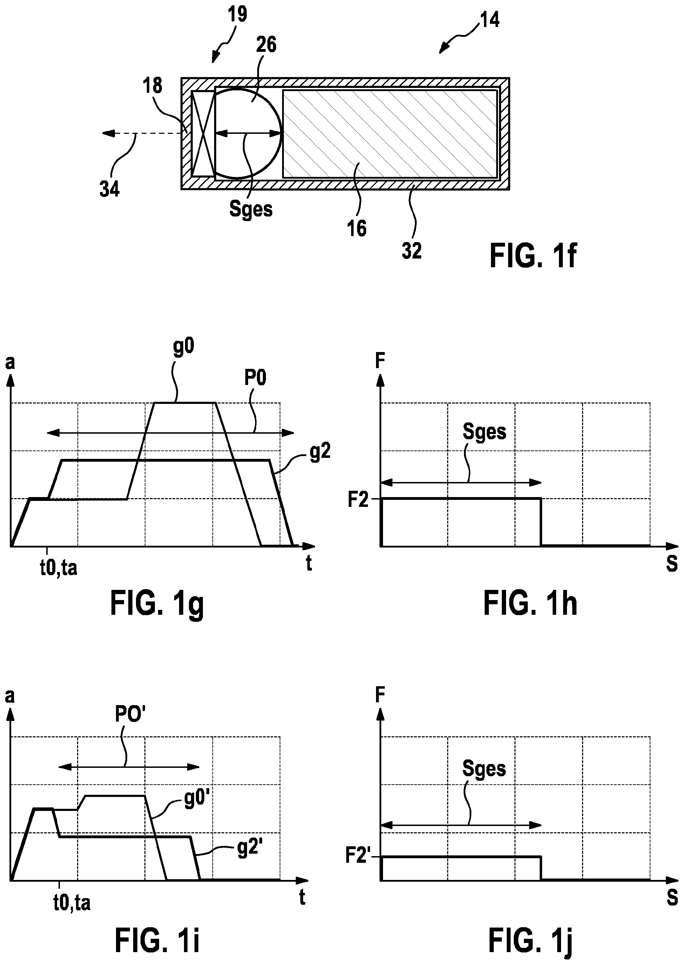

Die erste Phase endet mit der Einsetzzeit ta der Wirkung der Dämpfungseinrichtung 19. Beispielsweise kontaktiert das Objekt 16 ab der Einsetzzeit ta die aufblasbare Einrichtung 26 (siehe Fig. 1 c). Ab der Einsetzzeit ta ist das Objekt 16 deshalb entlang einer zweiten Teilstrecke Δs2 der vorgegebenen Sollstrecke Sges mittels der aktivierten Dämpfungseinrichtung 19 mit einer ersten Verzögerungskraft F1 verzögerbar. Somit beginnt mit der Einsetzzeit ta eine zweite Phase P2, innerhalb welcher das bewegte Objekt 16 mit der ersten Verzögerungskraft F1 abgebremst wird. Die erste Verzögerungskraft F1 kann vergleichsweise hoch gewählt werden, so dass trotz der kurzen Dämpfungsdauer/der kurzen Teilstrecke Δs2 der anschließende Aufprall des Objekts 16 an der Soll-Aufprallkomponente 18 deutlich abdämpfbar ist. Beispielsweise kann die erste Dämpfungskraft F1 bei mindestens 100 kN, insbesondere bei mindestens 200 kN, liegen. Mittels der ersten Dämpfungskraft F1 wird das Objekt 16 wieder an das Fahrzeug 10 angekoppelt. Deshalb weist die gemeinsame Beschleunigung a des Fahrzeugs 10 mit dem wiederangekoppelten Objekt 16 während der zweiten Phase P2 eine Reduzierung 42 auf.

Der mittels der Fig. 1c bis 1e wiedergegebene Betriebsmodus realisiert einen Insassenschutzmodus mit einer Strategie, bei welcher der Schutz der Insassen im Vordergrund steht. Zur Reduzierung der Insassenbelastung wird das mindestens eine Objekt 16 zeitweise so von der Fahrzeugrestmasse abgekoppelt, dass während dieses Zeitintervalls nicht die gesamte Fahrzeugmasse, sondern nur ein verringerter Anteil/die Fahrzeugrestmasse abgebremst wird. Auf diese Weise kann der Aufprallimpuls so beeinflusst werden, dass die auf den mindestens einen Fahrzeuginsassen wirkende Belastung reduzierbar ist. Der Insassenschutzmodus gewährleistet damit, dass das Objekt 16 trotz seiner hohen Masse keine Gefährdung für die Fahrzeuginsassen darstellt. Das Objekt 16 darf bei dieser Strategie im schlimmsten Fall zerstört werden. Aufgrund der Wahl des Insassenschutzmodus unter Berücksichtigung des mindestens einen Sensorsignals 20 ist verlässlich gewährleistet, dass der Insassenschutzmodus nur dann gewählt wird, wenn andernfalls ein zu hohes Verletzungsrisiko für die Fahrzeuginsassen besteht.

Fig. 1f bis 1h geben einen ersten Objektschutzmodus wieder, welcher mittels der Steuervorrichtung 12 und der Dämpfungseinrichtung 19 zusätzlich realisierbar ist. (Die Abszissen und Ordinaten der Koordinatensysteme der Fig. 1g und 1h entsprechen den Koordinatensystemen der Fig. 1d und 1e.)

In dem ersten Objektschutzmodus steht der Schutz des Objekts 16 im Vordergrund. Dies ist moralisch vertretbar, da der Objektschutzmodus spezifisch für die Fälle wählbar ist, in welchen kein Verletzungsrisiko für die Fahrzeuginsassen besteht. Da die Kosten für das Objekt 16, beispielsweise bei einer Ausbildung des Objekts 16 als Fahrzeugbatterie, häufig einen sehr hohen Anteil an den Gesamtfahrzeugkosten betragen, ist der Schutz des Objekts 16 oft von großer Bedeutung.

Zum Realisieren des Objektschutzmodus tritt (nahezu) im gleichen Moment, in welchem das Objekt 16 seine vorgegebene Fixierungsposition verlässt, die abbremsende Wirkung der Dämpfungseinrichtung 19 ein. Die Einsetzzeit ta ist damit (nahezu) gleich der Austrittszeit t0. Beispielsweise wird sofort nach dem Freigeben des Objekts 16 durch die Objektfixierungseinrichtung 28 mit dem Aufblasen der aufblasbaren Einrichtung 26 begonnen (siehe Fig. 1f).

Somit wird das Objekt 16 frühzeitig wieder an die Masse des Fahrzeugs 10 angekoppelt. Deshalb ist keine freie/dämpfungsfreie Bewegung des Objekts 16 möglich. Stattdessen wird das aus der Fixierungsposition bewegte Objekt 16 entlang der vorgegebenen Sollstrecke Sges während einer Phase P0 mittels der Dämpfungseinrichtung 19 mit einer zweiten Verzögerungskraft F2 kleiner als der ersten Verzögerungskraft F1 verzögert. Das Objekt 16 bleibt während seines Verstellens entlang der Sollstrecke Sges an das Fahrzeug 10 angekoppelt. Da somit ein längerer Weg zum Abbau der kinetischen Energie des Objekts 16 zur Verfügung steht, kann die zweite Dämpfungskraft F2 deutlich kleiner als die erste Dämpfungskraft F1 gewählt werden. Auf diese Weise kann eine signifikante Beschädigung des Objekts 16 aufgrund eines zu harten Kontakts zwischen der aufblasbaren Einrichtung 26 und dem Objekt 16 verlässlich unterbunden werden. Die während der Phase P0 realisierbare Beschleunigung des Objekts 16 ist mittels des Graphen g2 in dem Koordinatensystem der Fig. 1g wiedergegeben. (Der Graph g0 entspricht dem oben schon beschriebenen Graphen g0 der Fig. 1d.)

Mittels der Koordinatensysteme der Fig. 1i und 1j ist ein zweiter Objektschutzmodus mit einer reduzierten zweiten Verzögerungskraft F2' schematisch wiedergegeben. (Die Abszissen und Ordinaten der Koordinatensysteme der Fig. 1i und 1j entsprechen den Koordinatensystemen der Fig. 1d und 1e.)

Eine Höhe der reduzierten zweiten Verzögerungskraft F2' kann insbesondere abhängig von einer initialen Kollisionsgeschwindigkeit gewählt werden. Eine entsprechende Einstellung der reduzierten zweiten Verzögerungskraft F2 ist ausführbar, sofern die Steuervorrichtung 12 dazu ausgelegt ist, mindestens eine Größe bezüglich einer Soll-Stromdichte des Gasstroms und/oder eines Soll-Gesamtvolumens des Gasstroms in die aufblasbare Einrichtung 26 unter Berücksichtigung des mindestens einen bereitgestellten Sensorsignals 20 festzulegen. Auf diese Weise ist gerade so viel Volumen in die aufblasbare Einrichtung 26 einfüllbar, dass die gewünschte reduzierte zweite Verzögerungskraft F2' gewährleistet ist.

Der Graph g2' des Koordinatensystems der Fig. 1i gibt die Beschleunigung a des Objekts 16 wieder. Mittels des Graphen g0' ist eine Beschleunigung a angegeben, welche das Fahrzeug 10 bei einem Verharren des Objekts 16 in seiner Objektfixierungsposition während der kürzeren Phase P0' hätte.

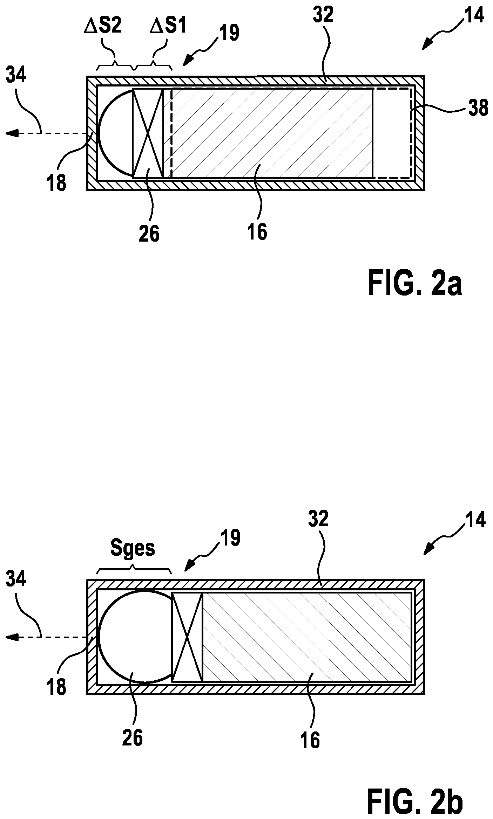

Fig. 2a und 2b zeigen schematische Darstellungen einer zweiten Ausführungsform der Objektankopplungsvorrichtung.

Bei der in Fig. 2a und 2b schematisch wiedergegebenen Objektankopplungsvorrichtung 14 ist die aufblasbare Einrichtung 26 ein direkt an dem Objekt 16 befestigter Luftsack/Airbag 26. Auch bei dieser Ausführungsform ist ein Insassenschutzmodus ausführbar, in welchem nach einer Entkopplung der Masse des Objekts 16 von der Fahrzeugrestmasse das Objekt 16 entlang der ersten Teilstrecke Δs1 frei/dämpfungsfrei in Fahrtrichtung 34 fliegt. Zur späteren Wiederankopplung der Masse des Objekts 16 wird nach einer bestimmten Differenzzeit Δt ≠ 0 der Luftsack 26 gezündet. Auf diese Weise kann die kinetische Energie des Objekts 16 über die zweite Teilstrecke Δs2 durch den Luftsack 26 abgebaut werden (siehe Fig. 2a).

Wie anhand der Fig. 2b erkennbar ist, ist auch der Objektschutzmodus mittels des in dem Objekt 16 angeordneten aufblasbaren Luftsacks 26 realisierbar. Erneut wird sofort nach der Entkopplung des Objekts 16 der Luftsack 26 gezündet. Durch den Luftsack 26 wird das Objekt 16 sofort nach der Entkopplung seiner Masse von der Fahrzeugrestmasse an das Fahrzeug 10 wieder angekoppelt, jedoch mit einer weicheren Steifigkeit (d.h. einer geringeren Steigung des Kraft-Verformungsverlaufs).

Die beiden oben beschriebenen Ausführungsformen realisieren jeweils ein Luftsackbasiertes System, das es erlaubt, mindestens ein Objekt 16 wahlweise starr oder nachgiebig an die Fahrzeugrestmasse anzubinden. Auf diese Weise kann die während eines starken Abbremsens/eines Crashs auf das gesamte Fahrzeug 10 wirkende Verzögerung so beeinflusst werden, dass die Belastung für die Insassen und das Objekt 16 im Vergleich zu einem Fahrzeug 10 ohne ein derartiges System verringert wird.

Das gewünschte Kraftniveau der Dämpfung kann bei den oben beschriebenen Ausführungsformen durch eine Größe eines Luftsacks 26 und/oder eines darin vorliegenden Innendrucks relativ frei eingestellt werden. Ein Kraftniveau des Luftsacks 26 kann insbesondere durch eine Steuerung des darin vorliegenden Innendrucks konstant gehalten werden. Beispielsweise können Entlüftungslöcher im Luftsack 26 ausgebildet sein. Weiterhin ist auch die Verwendung eines volladaptiven Gasgenerators denkbar, der z.B. ventilgesteuert ist, um ein konstantes Kraftniveau zu gewährleisten. Auch eine Permeabilität des Stoffes des Luftsacks kann so gewählt werden, dass ein konstantes Kraftniveau des Luftsacks 26 gewährleistbar ist. Die Form des Luftsacks 26 kann rund sein, wie zum Beispiel bei einem in einem Lenkrad integrierten Fahrer-Airbag. Ebenso kann die Form des aufgeblasenen Luftsacks 26 auch rechteckig, wie zum Beispiel bei einem Thorax-Airbag, sein.

Auch ein Gurt-Luftsack/Gurt-Airbag, wie er beispielsweise bei einem Beltbag (inflatable belt) für Fondpassagiere angewendet wird, kann für die Dämpfungseinrichtung 19 verwendet werden. Der Gurt-Luftsack/Gurt-Airbag kann beispielsweise in Form einer Leporello-Faltung (Zick-Zack-Falz) vorliegen. Sowohl die Deck- als auch die Unterseite können aus typischen Gurtmaterialien gefertigt werden. Dazwischen kann eine Airbag-Innendruck-Luftsackkammer ausgebildet sein. Vorteilhaft bei einer Verwendung eines Luftsacks mit einer Leporello-Faltung ist die vorgegebene und jederzeit kontrollierbare Entfaltungscharakteristik im Raum. Damit bleiben die Effekte aus der Interaktion eines sich entfaltenden Luftsacks in Z- bzw. Höhenrichtung und damit gegen möglicherweise verletzliche Seiten des Objekts 16 kontrollierbar. Insbesondere eine Unterseite oder ein Deckel einer als Objekt 16 eingesetzten Fahrzeugbatterie können somit verlässlich geschützt werden.

Eine weitere Alternative zum Realisieren einer aufblasbaren Einrichtung 26 ist eine aufblasbare Metallstruktur.

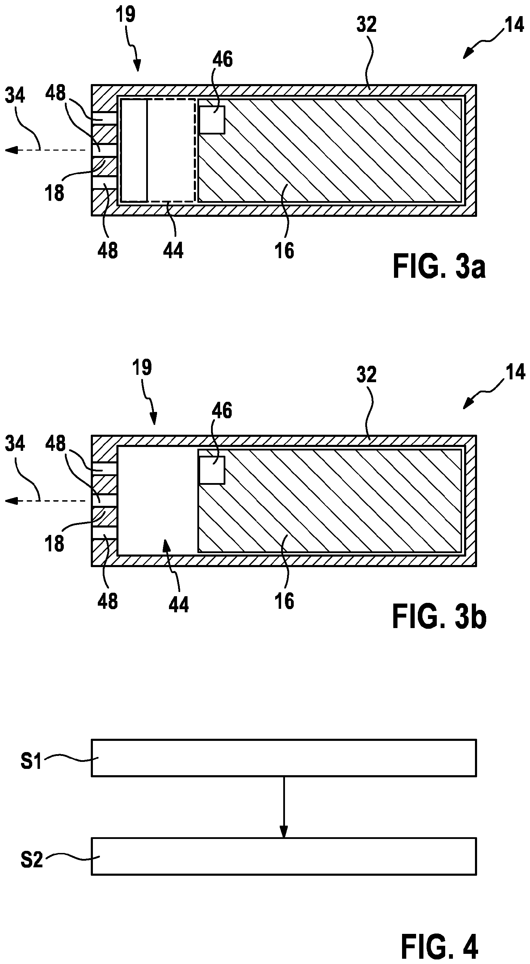

Fig. 3a und 3b zeigen schematische Darstellungen einer dritten Ausführungsform der Objektankopplungsvorrichtung.

Die in Fig. 3a und 3b schematisch wiedergegebene Objektankopplungsvorrichtung 14 ist so ausgelegt, dass ein Gasstrom (wie beispielsweise ein Luftstrom) in ein zwischen dem Objekt 16 und der Soll-Aufprallkomponente 18 liegendes (vorzugsweise luftdichtes) Volumen 44 mittels des mindestens einen Steuersignals 24 aktivierbar ist. Das Volumen 44 kann beispielsweise eine zwischen dem Objekt 16 und der Soll-Aufprallkomponente 18 liegende Zwischenkomponente 44 sein (siehe Fig. 3a). Als Volumen 44 kann auch der Raum zwischen dem Objekt 16 und der Soll-Aufprallkomponente 18 selbst unter Druck gesetzt werden (siehe Fig. 3b). Eine luftdichte Ausbildung des als Volumen 44 nutzbaren Raums ist mittels einer entsprechenden Ausbildung der Objektankopplungsvorrichtung 14 einfach realisierbar.

Der Gasstrom zum Einstellen des Innendrucks in dem Volumen 44 kann mittels eines Gasgenerators 46 bewirkt werden. Als Gasgenerator kann insbesondere auch ein Heizgasgenerator, Kaltgasgenerator oder ein pyrotechnischer Gasgenerator, bzw. eine Kombination daraus in Form eines Hybrid-Gasgenerators, genutzt werden. Optionaler Weise kann der Gasgenerator 46 an dem Objekt 16 angebracht sein. Als Alternative kann der Gasgenerator 46 auch extern von dem Objekt 16 angeordnet sein. Durch das Öffnen und Schließen mindestens eines Ventils 48 kann der in dem Volumen 44 vorliegender Innendruck zusätzlich gesteuert werden.

In allen oben beschriebenen Ausführungsformen kann ein Aktuator der Dämpfungseinrichtung 19 mehrere Schaltstufen haben. Der Aktuator kann auch eine Schaltlogik aufweisen, mittels welcher der zeitliche Soll-Verlauf der auszuführenden Dämpfung einstellbar ist.

Für den Insassenschutzmodus und den Objektschutzmodus sind unterschiedliche Kraftniveaus wünschenswert. Die unterschiedlichen Kraftniveaus für die verschiedenen Strategien können durch verschiedene Betreiberstufen des Aktuators, beispielsweise durch unterschiedliche Zündstufen oder einen volladaptiven Gasgenerator, verlässlich realisiert werden.

In den oben beschriebenen Ausführungsformen sind deren Gegenstände dazu ausgelegt, das mindestens eine Objekt bei einem Crash in Fahrtrichtung zu verzögern/abzubremsen. Es wird jedoch darauf hingewiesen, dass die Ausbildbarkeit einer Objektankopplungsvorrichtung 14 nicht auf eine bestimmte Crashrichtung, wie insbesondere einen Frontalcrash, begrenzt ist. Beispielsweise kann eine Objektankopplungsvorrichtung 14 auch so ausgelegt sein, dass sie ihre vorteilhafte Funktion bei einem Frontal-, Seiten- und/oder Heckcrash ausführt. Eine Objektankopplungsvorrichtung 14 kann in einer Weiterbildung auch für mehrere Crashrichtungen ausgebildet werden.

Fig. 4 zeigt ein Flussdiagramm zum Erläutern einer Ausführungsform des Verfahrens zum Dämpfen eines Aufpralls eines trägheitsbeschleunigten Objekts.

Das Verfahren trägt zum Dämpfen eines Aufpralls eines trägheitsbeschleunigten Objekts bei. Unter dem Objekt kann eine Masse verstanden werden, welche während einer Normalfahrt eines Fahrzeugs in einer vorgegebenen Fixierungsposition an und/oder in einer Objektankopplungsvorrichtung fixiert ist und zu einer Austrittszeit mittels einer Trägheitskraft aus der Fixierungsposition entlang einer vorgegebenen Sollstrecke auf eine Soll-Aufprallkomponente zu bewegt wird. Das Objekt kann insbesondere mindestens eine Fahrzeugbatterie sein. Die Ausführbarkeit des Verfahrens ist jedoch nicht darauf beschränkt.

In einem Verfahrensschritt S1 wird eine Information bezüglich einer Geschwindigkeit des Fahrzeugs, einer Beschleunigung des Fahrzeugs, eines in mindestens einem Teilvolumen des Fahrzeugs vorliegenden Drucks und/oder einer Crashstärke eines Crashs des Fahrzeugs ermittelt. Außerdem können eine Crashschwere einer Kollision und/oder Informationen über einen Kollisionsgegner, wie beispielsweise dessen Geschwindigkeit, dessen Gewicht, dessen Größe, dessen Abmessung und/oder dessen Beladungszustand, insbesondere dessen (zusätzliche) Beladungsmasse, eine Anzahl von seinen Fahrzeuginsassen und/oder ein Gewicht seiner Fahrzeuginsassen, ermittelt und/oder über einen entsprechenden Informationsaustausch zwischen dem Fahrzeug und dem weiteren Fahrzeug, insbesondere über GPS, abgefragt werden. Zusätzlich können eine PreCrash- Information, eine HotSpot-Information zu Unfallschwerpunkten, eine Car2Car-Information und/oder eine Car2X-Information ermittelt und/oder ausgetauscht werden.

Zum Ausführen des Verfahrensschritts S1 kann häufig mindestens ein herkömmlicher Sensor, wie beispielsweise mindestens ein Geschwindigkeitssensor, mindestens ein Beschleunigungssensor, mindestens ein Drucksensor und/oder mindestens ein Crashsensor, eingesetzt werden. Ebenso kann mindestens ein PreCrash-Sensor und/oder mindestens ein Fahrerassistenzsensor verwendet werden. Derartige Sensoren sind in der Regel bereits an einem Fahrzeug verbaut. Somit muss das Fahrzeug zum Ausführen des Verfahrensschritts S1 nicht mit weiteren Sensoren ausgestattet werden. Der mindestens eine zum Ausführen des Verfahrensschritts S1 eingesetzte kann auch durch mobile Endgeräte zur Verfügung gestellt werden.

In einem nachfolgenden Verfahrensschritt S2 wird eine Dämpfungseinrichtung unter Berücksichtigung der ermittelten Information angesteuert. Das Ansteuern der Dämpfungseinrichtung erfolgt derart, dass das Objekt vor einem Kontakt des Objekts mit der Soll-Aufprallkomponente mittels der angesteuerten Dämpfungseinrichtung abgebremst wird, wobei die Dämpfungseinrichtung unter Berücksichtigung der ermittelten Information in einen Soll-Betriebsmodus aus mindestens zwei ausführbaren Betriebsmoden der Dämpfungseinrichtung mit einer unterschiedlichen Zeitdifferenz zwischen einer Austrittszeit des Objekts aus der Fixierungsposition und einer Einsetzzeit einer mittels der angesteuerten Dämpfungseinrichtung auszuführenden Verzögerung des Objekts gesteuert wird. Die mindestens zwei ausführbaren Betriebsmoden können z.B. den oben schon beschriebenen Insassenmodus und den Objektschutzmodus umfassen. Deshalb wird hier lediglich auf die oberen Ausführungen zu den zur Dämpfung nutzbaren Moden verwiesen.

## Patentansprüche

1. Steuervorrichtung (12) für eine Objektankopplungsvorrichtung (14) eines Fahrzeugs (10),
wobei die Steuervorrichtung (12) dazu ausgelegt ist, unter Berücksichtigung mindestens eines bereitgestellten Sensorsignals (20) mindestens eines fahrzeugeigenen Sensors (22) eine Dämpfungseinrichtung (19) der Objektankopplungsvorrichtung (14) mittels mindestens eines Steuersignals (24) so anzusteuern, dass ein während einer Normalfahrt des Fahrzeugs (10) in einer vorgegebenen Fixierungsposition (38) an und/oder in der Objektankopplungsvorrichtung (14) fixierbares Objekt (16), welches mittels einer Trägheitskraft aus der Fixierungsposition (38) entlang einer vorgegebenen Sollstrecke (Sges) auf eine Soll-Aufprallkomponente (18) des Fahrzeugs (10) zu bewegbar ist, vor einem Kontakt des Objekts (16) mit der Soll-Aufprallkomponente (18) mittels der angesteuerten Dämpfungseinrichtung (19) verzögerbar ist,
und wobei die Steuervorrichtung (12) zusätzlich dazu ausgelegt ist, unter Berücksichtigung des mindestens einen Sensorsignals (20) einen Soll-Betriebsmodus der Dämpfungseinrichtung (19) aus mindestens zwei ausführbaren Betriebsmoden der Dämpfungseinrichtung (19) mit einer unterschiedlichen Zeitdifferenz (Δt) zwischen einer Austrittszeit (t0) des Objekts (16) aus der Fixierungsposition (38) und einer Einsetzzeit (ta) einer mittels der angesteuerten Dämpfungseinrichtung (19) auszuführenden Verzögerung des Objekts (16) festzulegen und die Dämpfungseinrichtung (19) mittels des mindestens einen Steuersignals (24) in den Soll-Betriebsmodus zu steuern.

2. Steuervorrichtung (12) nach Anspruch 1, wobei die Steuervorrichtung (12) dazu ausgelegt ist, die jeweilige Einsetzzeit (ta) des Soll-Betriebsmodus und/oder die jeweilige Zeitdifferenz (Δt) zwischen der Austrittszeit (t0) und der Einsetzzeit (ta) des Soll-Betriebsmodus unter Berücksichtigung des mindestens einen Sensorsignals (20) festzulegen und die Dämpfungseinrichtung (19) zu der Einsetzzeit (ta) mittels des mindestens einen Steuersignals (24) zu aktivieren.

3. Steuervorrichtung (12) nach Anspruch 1 oder 2, wobei die Steuervorrichtung (12) dazu ausgelegt ist, mindestens einen Gasgenerator (46), mindestens eine Schließeinrichtung, mindestens ein Ventil (48) und/oder mindestens einen Zünder der Dämpfungseinrichtung (19) mittels des mindestens einen Steuersignals (24) so anzusteuern, dass ein Gasstrom in mindestens eine aufblasbare Einrichtung (26) der Dämpfungseinrichtung (19) und/oder in ein zwischen dem Objekt (16) und der Soll-Aufprallkomponente (18) liegendes Volumen (44) auslösbar ist.

4. Steuervorrichtung (12) nach Anspruch 3, wobei die Steuervorrichtung (12) zusätzlich dazu ausgelegt ist, mindestens eine Soll-Größe bezüglich einer Soll-Leistung des mindestens einen Gasgenerators (46), einer Soll-Öffnungsdauer und/oder einer Soll-Öffnungsspaltgröße der mindestens einen Schließeinrichtung, einer Soll-Öffnungsdauer und/oder einer Soll-Öffnungsspaltgröße des mindestens einen Ventils (48), einer Soll-Anzahl der zu aktivierenden Gasgeneratoren (46) und/oder Zünder und/oder einer Soll-Anzahl der zu öffnenden Schließeinrichtungen und/oder Ventile (48) unter Berücksichtigung des mindestens einen Sensorsignals (20) festzulegen.

5. Steuervorrichtung (12) nach einem der vorhergehenden Ansprüchen, wobei die Steuervorrichtung (12) zusätzlich dazu ausgelegt ist, unter Berücksichtigung des mindestens einen Sensorsignals (20) die Austrittszeit (t0) des Objekts (16) aus der vorgegebenen Fixierungsposition (38) festzulegen und eine Objektfixierungseinrichtung (28) der Objektanordnungsvorrichtung (14) so anzusteuern, dass das Objekt (16) durch die angesteuerte Objektfixierungseinrichtung (28) zu der festgelegten Austrittszeit (t0) freigebbar ist.

6. Objektankopplungsvorrichtung (14) für ein Fahrzeug zum Zusammenwirken mit einer Steuervorrichtung (12) nach einem der vorhergehenden Ansprüche, mit:
einer Objektfixierungseinrichtung (28), mittels welcher ein Objekt (16) während einer Normalfahrt des Fahrzeugs (10) in einer vorgegebenen Fixierungsposition (38) an und/oder in der Objektankopplungsvorrichtung (14) fixierbar ist; und
einer Dämpfungseinrichtung (19), welche mittels des mindestens einen Steuersignals (24) der Steuervorrichtung (12) so ansteuerbar ist, dass das mittels einer Trägheitskraft aus der Fixierungsposition (38) entlang einer vorgegebenen Sollstrecke (Sges) auf eine Soll-Aufprallkomponente (18) zu bewegbare Objekt (16) vor einem Kontakt des Objekts (16) mit der Soll-Aufprallkomponente (18) mittels der angesteuerten Dämpfungseinrichtung (19) verzögerbar ist, wobei die Dämpfungseinrichtung (19) mittels des mindestens einen Steuersignals (24) in einen Soll-Betriebsmodus aus mindestens zwei ausführbaren Betriebsmoden der Dämpfungseinrichtung (19) mit einer unterschiedlichen Zeitdifferenz (Δt) zwischen einer Austrittszeit (t0) des Objekts (16) aus der Fixierungsposition (38) und einer Einsetzzeit (ta) einer mittels der angesteuerten Dämpfungseinrichtung (19) auszuführenden Verzögerung des Objekts (16) steuerbar ist.

7. Objektankopplungsvorrichtung (14) nach Anspruch 6, wobei die Dämpfungseinrichtung (19) mindestens einen Gasgenerator (46), mindestens eine Schließeinrichtung, mindestens ein Ventil (48) und/oder mindestens einen Zünder umfasst, welche mittels des mindestens einen Steuersignals (24) so ansteuerbar sind, dass ein Gasstrom in mindestens eine aufblasbare Einrichtung (26) der Dämpfungseinrichtung (19) und/oder in ein zwischen dem Objekt (16) und der Soll-Aufprallkomponente (18) liegendes Volumen (44) auslösbar ist.

8. Objektankopplungsvorrichtung (14) nach Anspruch 7, wobei die Dämpfungseinrichtung (19) als die mindestens eine aufblasbare Einrichtung (26) mindestens einen Luftsack (26), mindestens einen Gurt-integrierten Luftsack und/oder mindestens eine aufblasbare Metallstruktur umfasst.

9. Objektankopplungsvorrichtung (14) nach einem der Ansprüche 6 bis 8, wobei mittels der Dämpfungseinrichtung (19) ein Insassenschutzmodus realisierbar ist, in welchem das aus der Fixierungsposition (38) bewegte Objekt (16) zuerst entlang einer ersten Teilstrecke (Δs1) der vorgegebenen Sollstrecke (Sges) dämpfungsfrei bewegbar ist und anschließend entlang einer zweiten Teilstrecke (Δs2) der vorgegebenen Sollstrecke (Sges) mittels der Dämpfungseinrichtung (19) mit einer ersten Verzögerungskraft (F1) verzögerbar ist.

10. Objektankopplungsvorrichtung (14) nach Anspruch 9, wobei mittels der Dämpfungseinrichtung (19) zusätzlich ein Objektschutzmodus realisierbar ist, in welchem das aus der Fixierungsposition (38) bewegte Objekt (16) entlang der vorgegebenen Sollstrecke (Sges) mittels der Dämpfungseinrichtung (19) mit einer zweiten Verzögerungskraft (F2) kleiner als der ersten Verzögerungskraft (F1) verzögerbar ist.

11. Objektankopplungsvorrichtung (14) nach einem der Ansprüche 6 bis 10, wobei die Objektfixierungseinrichtung (28) aus einem ersten Modus, in welchem das Objekt (16) mittels der Objektfixierungseinrichtung (28) in der Fixierungsposition (38) fixierbar ist, in einen zweiten Modus so steuerbar ist, dass das Objekt (16) ab einem Steuern der Objektfixierungseinrichtung (28) in den zweiten Modus aus der Fixierungsposition (38) freigebbar ist.

12. Objektankopplungsvorrichtung (14) nach Anspruch 11, wobei die Objektfixierungseinrichtung (28) mittels der Steuervorrichtung (12) aus dem ersten Modus in den zweiten Modus steuerbar ist.

13. Objektankopplungsvorrichtung (14) nach einem der Ansprüche 6 bis 12, wobei die Objektankopplungsvorrichtung(14) eine Führungsstruktur (32) aufweist, mittels welcher das mittels der Trägheitskraft bewegbare Objekt (16) entlang der vorgegebenen Sollstrecke (Sges) führbar ist.

14. Objektankopplungsvorrichtung (14) nach einem der Ansprüche 6 bis 13, wobei die Objektankopplungsvorrichtung (14) die Steuervorrichtung (12) nach einem der Ansprüche 1 bis 5 umfasst.

15. Verfahren zum Dämpfen eines Aufpralls eines trägheitsbeschleunigten Objekts (16), welches während einer Normalfahrt eines Fahrzeugs (10) in einer vorgegebenen Fixierungsposition (38) an und/oder in einer Objektankopplungsvorrichtung (14) fixiert ist und zu einer Austrittszeit (t0) mittels einer Trägheitskraft aus der Fixierungsposition (38) entlang einer vorgegebenen Sollstrecke (Sges) auf eine Soll-Aufprallkomponente (18) zu bewegt wird, **gekennzeichnet durch** die Schritte:
Ermitteln einer Information (20) bezüglich einer Geschwindigkeit des Fahrzeugs (10), einer Beschleunigung des Fahrzeugs (10), eines in mindestens einem Teilvolumen des Fahrzeugs (10) vorliegenden Drucks und/oder einer Crashstärke eines Crashs des Fahrzeugs (10); und
Ansteuern einer Dämpfungseinrichtung (19) unter Berücksichtigung der ermittelten Information (20) derart, dass das Objekt (16) vor einem Kontakt des Objekts (16) mit der Soll-Aufprallkomponente (18) mittels der angesteuerten Dämpfungseinrichtung (19) abgebremst wird, wobei die Dämpfungseinrichtung (19) unter Berücksichtigung der ermittelten Information (20) in einen Soll-Betriebsmodus aus mindestens zwei ausführbaren Betriebsmoden der Dämpfungseinrichtung (19) mit einer unterschiedlichen Zeitdifferenz (Δt) zwischen der Austrittszeit (t0) des Objekts (16) aus der Fixierungsposition (38) und einer Einsetzzeit (ta) einer mittels der angesteuerten Dämpfungseinrichtung (19) auszuführenden Verzögerung des Objekts (16) gesteuert wird.

## Claims

1. Control device (12) for an object coupling device (14) of a vehicle (10),
wherein the control device (12), taking into account at least one provided sensor signal (20) of at least one vehicle's own sensor (22), is designed to activate a dampening device (19) of the object coupling device (14) by means of at least one control signal (24) so that an object (16) that can be fixed in a predefined fixing position (38) on and/or in the object coupling device (14) during normal travel of the vehicle (10) and that can be moved by means of an inertial force from the fixing position (38) along a predefined target route (Sges) to a target impact component (18) of the vehicle (10), can be decelerated by means of the activated dampening device (19) prior to contact of the object (16) with the target impact component (18),
and wherein the control device (12)' is additionally designed, taking into account the at least one sensor signal (20), to determine a target operating mode of the dampening device (19) of at least two operating modes of the dampening device (19) that can be implemented with a different time difference (Δt) between an exit time (t0) of the object (16) from the fixing position (38) and an onset time (ta) of the deceleration of the object (16) to be performed by means of the activated dampening device (19) and to control the dampening device (19) in the target operating mode by means of the at least one control signal (24).

2. Control device (12) according to Claim 1, wherein the control device (12) is configured to determine the respective onset time (ta) of the target operating mode and/or the respective time difference (Δt) between the exit time (t0) and the onset time (ta) of the target operating mode, taking into account the at least one sensor signal (20), and to activate the dampening device (19) at the onset time (ta) by means of the at least one control signal (24).

3. Control device (12) according to Claim 1 or 2, wherein the control device (12) is configured to activate at least one gas generator (46), at least one closure device, at least one valve (48) and/or at least one igniter of the dampening device (19) by means of the at least one control signal (24) so that a gas flow can be initiated in at least one inflatable device (26) of the dampening device (19) and/or in a volume (44) disposed between the object (16) and the target impact component (18).

4. Control device (12) according to Claim 3, wherein the control device (12) is additionally configured to determine at least one target variable relating to a target power of the at least one gas generator (46), a target opening duration and/or a target size of the opening gap of the at least one closure device, a target opening duration and/or a target size of the opening gap of the at least one valve (48), a target number of the gas generators (46) and/or igniters to be activated and/or a target number of the closure devices and/or valves (48) to be opened, taking into account the at least one sensor signal (20).

5. Control device (12) according to any one of the preceding claims, wherein the control device (12) is additionally configured, taking into account the at least one sensor signal (20), to determine the exit time (t0) of the object (16) from the predefined fixing position (38) and to activate an object fixing device (28) of the object arranging device (14) so that the object (16) can be released at the determined exit time (t0) by the activated object fixing device (28).

6. Object coupling device (14) for a vehicle for working in conjunction with a control device (12) according to any one of the preceding claims, with
an object fixing device (28), by means of which an object (16) can be fixed in a predefined fixing position (38) on and/or in the object coupling device (14) during normal travel of the vehicle (10); and
a dampening device (19), which can be activated by means of the at least one control signal (24) of the control device (12) so that the object (16) displaceable by means of an inertial force from the fixing position (38) along a predefined target route (Sges) to a target impact component (18) can be decelerated by means of the activated dampening device (19) prior to contact of the object (16) with the target impact component (18), wherein the dampening device (19) can be controlled by means of the at least one control signal (24) in a target operating mode of at least two operating modes of the dampening device (19) that can be implemented with a different time difference (Δt) between an exit time (t0) of the object (16) from the fixing position (38) and an onset time (ta) of a deceleration of the object (16) to be performed by means of the activated dampening device (19).

7. Object coupling device (14) according to Claim 6, wherein the dampening device (19) comprises at least one gas generator (46), at least one closure device, at least one valve (48) and/or at least one igniter, which can be activated by means of the at least one control signal (24) so that a gas flow can be initiated in at least one inflatable device (26) of the dampening device (19) and/or in a volume (44) disposed between the object (16) and the target impact component (18).

8. Object coupling device (14) according to Claim 7, wherein the dampening device (19) comprises at least one airbag (26), at least one belt-integrated airbag and/or at least one inflatable metal structure as the at least one inflatable device (26).

9. Object coupling device (14) according to any one of Claims 6 to 8, wherein by means of the dampening device (19) an occupant protection mode can be implemented in which the object (16) displaced from the fixing position (38) can first be displaced along a first sub path (Δs1) of the predefined target route (Sges) without dampening and can then be decelerated with a first deceleration force (F1) along a second sub path (Δs2) of the predefined target route (Sges) by means of the dampening device (19).

10. Object coupling device (14) according to Claim 9, wherein an object protection mode can additionally be implemented by means of the dampening device (19), in which mode the object (16) displaced from the fixing position (38) along the predefined target route (Sges) by means of the dampening device (19) can be decelerated with a second deceleration force (F2) that is smaller than the first deceleration force (F1).

11. Object coupling device (14) according to any one of Claims 6 to 10, wherein the object fixing device (28) can be controlled from a first mode, in which the object (16) can be fixed in the fixing position (38) by means of the object fixing device (28), into a second mode so that the object (16) can be released from the fixing position (38) from when the object fixing device (28) is controlled into the second mode.

12. Object coupling device (14) according to Claim 11, wherein the object fixing device (28) can be controlled from the first mode into the second mode by means of the control device (12).

13. Object coupling device (14) according to any one of Claims 6 to 12, wherein the object coupling device (14) comprises a guide structure (32) by means of which the object (16) that can be displaced by means of the inertial force can be guided along the predefined target route (Sges).

14. Object coupling device (14) according to any one of Claims 6 to 13, wherein the object coupling device (14) comprises the control device (12) according to any one of Claims 1 to 5.

15. Method for dampening an impact of an inertially accelerated object (16), which can be fixed in a predefined fixing position (38) on and/or in an object coupling device (14) during normal travel of a vehicle (10) and which can be displaced from the fixing position (38) at an exit time (t0) by means of an inertial force along a predefined target route (Sges) to a target impact component (18), **characterized by** the steps:
determining information (20) relating to a speed of the vehicle (10), an acceleration of the vehicle (10), a pressure present in at least one sub volume of the vehicle (10) and/or a crash intensity of a crash of the vehicle (10); and
activating a dampening device (19) taking into account the determined information (20) such that the object (16) is braked by means of the activated dampening device (19) prior to a contact of the object (16) with the target impact component (18), wherein the dampening device (19), taking into account the determined information (20), is controlled in a target operating mode of at least two operating modes of the dampening device (19) that can be implemented with a different time difference (Δt) between the exit time (t0) of the object (16) from the fixing position (38) and an onset time (ta) of a deceleration of the object(16) to be performed by means of the activated dampening device (19).

## Revendications

1. Dispositif de commande (12) pour un dispositif d'accouplement d'objet (14) d'un véhicule (10),
dans lequel le dispositif de commande (12) est conçu pour, en tenant compte d'au moins un signal de capteur fourni (20) d'au moins un capteur du véhicule (22), activer un dispositif d'amortissement (19) du dispositif d'accouplement d'objet (14) au moyen d'au moins un signal de commande (24), de telle manière qu'un objet (16) pouvant être fixé dans une position de fixation prédéterminée (38) sur et/ou dans le dispositif d'accouplement d'objet (14) pendant une marche normale du véhicule (10), et qui peut être déplacé au moyen d'une force d'inertie de la position de fixation (38) le long d'une course théorique prédéterminée (Sges) vers un composant d'impact théorique (18) du véhicule (10), puisse être retardé avant un contact de l'objet (16) avec le composant d'impact théorique (18) au moyen du dispositif d'amortissement activé (19),
et dans lequel le dispositif de commande (12) est en outre conçu pour, en tenant compte de l'au moins un signal de capteur (20), fixer un mode de fonctionnement théorique du dispositif d'amortissement (19) parmi au moins deux modes de fonctionnement exécutables du dispositif d'amortissement (19) avec une différence de temps différente (Δt) entre un instant de sortie (t0) de l'objet (16) hors de la position de fixation (38) et un instant d'application (ta) d'un retard de l'objet (16) à réaliser au moyen du dispositif d'amortissement activé (19) et pour commander le dispositif d'amortissement (19) dans le mode de fonctionnement théorique au moyen de l'au moins un signal de commande (24).

2. Dispositif de commande (12) selon la revendication 1, dans lequel le dispositif de commande (12) est conçu pour fixer l'instant d'application respectif (ta) du mode de fonctionnement théorique et/ou la différence de temps respective (Δt) entre l'instant de sortie (t0) et l'instant d'application (ta) du mode de fonctionnement théorique en tenant compte de l'au moins un signal de capteur (20) et pour activer le dispositif d'amortissement (19) à l'instant d'application (ta) au moyen de l'au moins un signal de commande (24).

3. Dispositif de commande (12) selon la revendication 1 ou 2, dans lequel le dispositif de commande (12) est conçu pour commander au moins un générateur de gaz (46), au moins un dispositif de fermeture, au moins une soupape (48) et/ou au moins un déclencheur du dispositif d'amortissement (19) au moyen de l'au moins un signal de commande (24), de telle manière qu'un courant de gaz puisse être provoqué dans au moins un dispositif gonflable (26) du dispositif d'amortissement (19) et/ou dans un volume (44) situé entre l'objet (16) et le composant d'impact théorique (18).

4. Dispositif de commande (12) selon la revendication 3, dans lequel le dispositif de commande (12) est en outre conçu pour fixer, en tenant compte de l'au moins un signal de capteur (20), au moins une grandeur de consigne concernant une puissance théorique de l'au moins un générateur de gaz (46), une durée d'ouverture théorique et/ou une grandeur de fente d'ouverture théorique de l'au moins un dispositif de fermeture, une durée d'ouverture théorique et/ou une grandeur de fente d'ouverture théorique de l'au moins une soupape (48), un nombre théorique des générateurs de gaz (46) et/ou de déclencheurs à activer et/ou un nombre théorique des dispositifs de fermeture et/ou de soupapes (48) à ouvrir.

5. Dispositif de commande (12) selon l'une quelconque des revendications précédentes, dans lequel le dispositif de commande (12) est en outre conçu pour fixer, en tenant compte de l'au moins un signal de capteur (20), l'instant de sortie (t0) de l'objet (16) hors de la position de fixation prédéterminée (38) et activer un dispositif de fixation d'objet (28) du dispositif d'arrangement d'objet (14) de telle manière que l'objet (16) puisse être libéré par le dispositif de fixation d'objet activé (28) à l'instant de sortie fixé (t0).

6. Dispositif d'accouplement d'objet (14) pour un véhicule destiné à coopérer avec un dispositif de commande (12) selon l'une quelconque des revendications précédentes, avec:
un dispositif de fixation d'objet (28), au moyen duquel un objet (16) peut être fixé dans une position de fixation prédéterminée (38) sur et/ou dans le dispositif d'accouplement d'objet (14) pendant une marche normale du véhicule (10); et
un dispositif d'amortissement (19), qui peut être activé au moyen de l'au moins un signal de commande (24) du dispositif de commande (12), de telle manière que l'objet (16) déplaçable au moyen d'une force d'inertie hors de la position de fixation (38) le long d'une course théorique prédéterminée (Sges) vers un composant d'impact théorique (18) puisse être retardé avant un contact de l'objet (16) avec le composant d'impact théorique (18) au moyen du dispositif d'amortissement activé (19), dans lequel le dispositif d'amortissement (19) peut être commandé au moyen de l'au moins un signal de commande (24) dans un mode de fonctionnement théorique parmi au moins deux modes de fonctionnement exécutables du dispositif d'amortissement (19) avec une différence de temps différente (Δt) entre un instant de sortie (t0) de l'objet (16) hors de la position de fixation (38) et un instant d'application (ta) d'un retard de l'objet (16) à réaliser au moyen du dispositif d'amortissement activé (19).

7. Dispositif d'accouplement d'objet (14) selon la revendication 6, dans lequel le dispositif d'amortissement (19) comprend au moins un générateur de gaz (46), au moins un dispositif de fermeture, au moins une soupape (48) et/ou au moins un déclencheur, qui peuvent être activés au moyen de l'au moins un signal de commande (24), de telle manière qu'un courant de gaz puisse être provoqué dans au moins un dispositif gonflable (26) du dispositif d'amortissement (19) et/ou dans un volume (44) situé entre l'objet (16) et le composant d'impact théorique (18).

8. Dispositif d'accouplement d'objet (14) selon la revendication 7, dans lequel le dispositif d'amortissement (19) comprend en tant qu'au moins un dispositif gonflable (26) au moins un coussin d'air (26), au moins un coussin d'air intégré dans une ceinture et/ou au moins une structure métallique gonflable.

9. Dispositif d'accouplement d'objet (14) selon l'une quelconque des revendications 6 à 8, dans lequel un mode de protection des passagers peut être réalisé au moyen du dispositif d'amortissement (19), dans lequel l'objet (16) déplacé hors de la position de fixation (38) est d'abord déplacé sans amortissement le long d'une première course partielle (Δs1) de la course théorique prédéterminée (Sges) et peut ensuite être retardé avec une première force de retardement (F1) le long d'une deuxième course partielle (Δs2) de la course théorique prédéterminée (Sges) au moyen du dispositif d'amortissement (19).

10. Dispositif d'accouplement d'objet (14) selon la revendication 9, dans lequel un mode de protection d'objet peut en outre être réalisé au moyen du dispositif d'amortissement (19), dans lequel l'objet (16) déplacé hors de la position de fixation (38) peut être retardé le long de la course théorique prédéterminée (Sges) au moyen du dispositif d'amortissement (19) avec une deuxième force de retardement (F2) inférieure à la première force de retardement (F1).

11. Dispositif d'accouplement d'objet (14) selon l'une quelconque des revendications 6 à 10, dans lequel le dispositif de fixation d'objet (28) peut être commandé d'un premier mode, dans lequel l'objet (16) peut être fixé dans la position de fixation (38) au moyen du dispositif de fixation d'objet (28), à un deuxième mode, de telle manière que l'objet (16) puisse être libéré de la position de fixation (38) à partir d'une commande du dispositif de fixation d'objet (28) dans le deuxième mode.

12. Dispositif d'accouplement d'objet (14) selon la revendication 11, dans lequel le dispositif de fixation d'objet (28) peut être commandé du premier mode au deuxième mode au moyen du dispositif de commande (12).

13. Dispositif d'accouplement d'objet (14) selon l'une quelconque des revendications 6 à 12, dans lequel le dispositif d'accouplement d'objet (14) présente une structure de guidage (32), au moyen de laquelle l'objet (16) déplaçable au moyen de la force d'inertie peut être guidé le long de la course théorique prédéterminée (Sges).

14. Dispositif d'accouplement d'objet (14) selon l'une quelconque des revendications 6 à 13, dans lequel le dispositif d'accouplement d'objet (14) comprend le dispositif de commande (12) selon l'une quelconque des revendications 1 à 5.

15. Procédé pour amortir un impact d'un objet (16) accéléré sous l'effet de la force d'inertie, qui est fixé dans une position de fixation prédéterminée sur et/ou dans un dispositif d'accouplement d'objet (14) pendant une marche normale d'un véhicule (10) et qui est déplacé à un instant de sortie (t0) au moyen d'une force d'inertie hors de la position de fixation (38), le long d'une course théorique prédéterminée (Sges) vers un composant d'impact théorique (18), **caractérisé par** les étapes suivantes:
déterminer une information (20) concernant une vitesse du véhicule (10), une accélération du véhicule (10), une pression régnant dans au moins un volume partiel du véhicule (10) et/ou une intensité de collision d'une collision du véhicule (10); et
activer un dispositif d'amortissement (19) en tenant compte de l'information déterminée (20), de telle manière que l'objet (16) soit freiné au moyen du dispositif d'amortissement activé (19) avant un contact de l'objet (16) avec le composant d'impact théorique (18), dans lequel on commande, en tenant compte de l'information déterminée (20), le dispositif d'amortissement (19) dans un mode de fonctionnement théorique parmi au moins deux modes de fonctionnement exécutables du dispositif d'amortissement (19), avec une différence de temps différente (Δt) entre l'instant de sortie (t0) de l'objet (16) hors de la position de fixation (38) et un instant d'application (ta) d'un retard de l'objet (16) à réaliser au moyen du dispositif d'amortissement activé (19).
